# EUROPÄISCHE PATENTSCHRIFT

(11) **EP 0 491 369 B1**
(45) Veröffentlichungstag und Bekanntmachung des Hinweises auf die Patenterteilung: **27.09.1995**
(21) Anmeldenummer: 91121637.2
(22) Anmeldetag: 17.12.1991
(51) Int. Cl.: G01B 5/00

(54) **Vorrichtung zum Vermessen eines Zweiradrahmens**
Device to measure the frame of a bicycle
Dispositif pour mesurer le cadre d'une bicyclette

(30) Priorität: 18.12.1990 DE 9017069 U
(43) Veröffentlichungstag der Anmeldung: 24.06.1992
(73) Patentinhaber: Scheibner, Bernd, Dipl.-Ing., D-38162 Cremlingen (DE)
(72) Erfinder: Köster, Gerhard, W-8945 Legau (DE)
(74) Vertreter: Gramm, Werner, Prof., Dipl.-Ing.

(56) Entgegenhaltungen:
- WO-A-90/10188
- DE-A- 3 807 577
- DE-B- 2 738 609
- GB-A- 2 037 992
- US-A- 4 015 339
- US-A- 4 630 379

## Beschreibung

Die Erfindung betrifft eine Vorrichtung zum Vermessen eines Zweiradrahmens, insbesondere Motorradrahmens, nach dem Oberbegriff des Anspruchs 1.

Aus der DE-PS 27 38 609 ist eine Prüf- und Meßlehre zum Feststellen von Verformungen des Rahmens von Motorrädern bekannt, die aus einem rechteckigen Zentriergestell und daran angelenkten Längsstreben besteht, an deren Enden Kontrollstifte angebracht sind. Das Zentriergestell wird mittels Zentrierkegeln, von denen einer in Achsrichtung relativ zum Zentriergestell verstellbar ist, auf das Gabeljoch aufgesetzt, worauf entsprechend den für den zu untersuchenden Motorradtyp vorgesehenen Normmaßen der Winkel zwischen Zentriergestell und Längsstreben eingestellt und mit Hilfe einer Flügelschraube arretiert wird. Auf die hintere Schwingenaufnahme wird eine Kappe aufgesetzt, die den zulässigen Toleranzbereich durch eine Markierung andeutet. Der Grad und die Art der Verbiegung des Motorradrahmens kann dann aus der relativen Lage der Spitze des Kontrollstiftes in Bezug auf die auf die Schwingenaufnahme aufgesetzte Kappe abgelesen werden.

Diese bekannte Meßlehre ist einerseits umständlich an einem Motorrad anzubringen, und andererseits läßt die Genauigkeit der Meßlehre sehr zu wünschen übrig. Abgesehen davon, daß das Zentriergestell auf das Gabeljoch aufgesetzt wird, das bereits gestaucht oder verzogen sein kann, ist das Zentriergestell selbst mit den daran angelenkten Längsstreben leicht Verformungen unterworfen, die eine genaue Vermessung nicht zulassen.

Aus der WO-A-9010188 ist ein Verfahren zum Vermessen eines Fahrzeugrahmens bekannt, bei dem in einiger Entfernung von dem Fahrzeugrahmen ein Referenzpunkt bestimmt wird, von dem aus ein Lasergerät, das um eine senkrecht stehende Achse verschwenkbar ist, ausgerichtet wird. Der von dem Lasergerät ausgehende Richtstrahl liegt daher immer in einer horizontalen Ebene, so daß eine Erfassung von Zielmarken nur in dieser Ebene möglich ist. Das aus dieser Druckschrift bekannte Verfahren eignet sich wegen seines umständlichen Aufbaus nicht zum Vermessen eines Zweiradrahmens.

Aus der US-A-4 630 379 ist ein ähnliches Verfahren bekannt, bei der durch fächerförmiges Aufspannen eines Laserstrahls eine horizontale Bezugsebene für Vermessungszwecke geschaffen wird. Bei diesem vorbekannten Verfahren werden längenverstellbare Zielmarkierungen verwendet, die dazu vorgesehen sind, von der Bodenfläche eines Fahrzeuges in die horizontale Meßebene herabzuhängen.

Ausgehend von diesem Stand der Technik liegt der Erfindung die Aufgabe zugrunde, eine Vorrichtung unter Verwendung eines Lasergerätes zu schaffen, die an einem Motorrad einfach angebracht werden kann und ein sehr genaues Meßergebnis liefert.

Diese Aufgabe wird erfindungsgemäß durch die Merkmale im kennzeichnenden Teil des Anspruches 1 gelöst. Durch die erfindungsgemäß geschaffene Verschwenkbarkeit eines Lasergerätes in einer vertikalen Ebene wird die Verwendung eines Lasergerätes unmittelbar am Zweiradrahmen selbst ermöglicht, wodurch ein außerordentlich genaues Meßergebnis erzielt wird und zu dem eine einfach an einem Motorrad oder anderem Zweirad anzusetzende Vorrichtung ausgebildet werden kann.

Vorteilhafte Ausgestaltungen der Erfindung sind in der nachfolgenden Beschreibung und in den weiteren Ansprüchen angegeben.

Eine beispielsweise Ausführungsform der Erfindung wird nachfolgend anhand der Zeichnung näher erläutert. Es zeigen
- Fig. 1: eine schematische Draufsicht auf die Vorrichtung,
- Fig. 2: einen Querschnitt durch die am Lenkerkopf anzusetzende Schiene und
- Fig. 3: eine abgewandelte Ausführungsform.

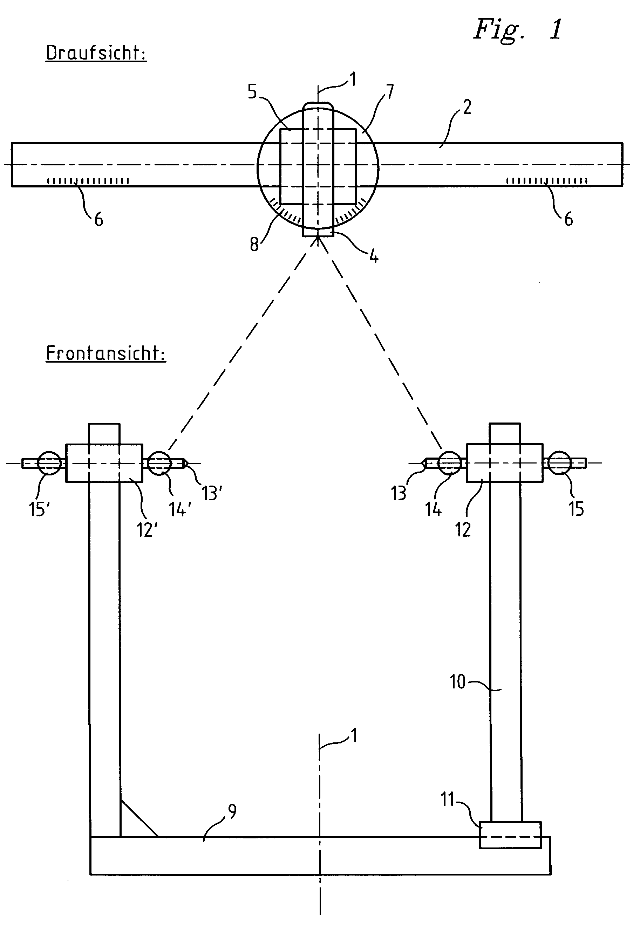

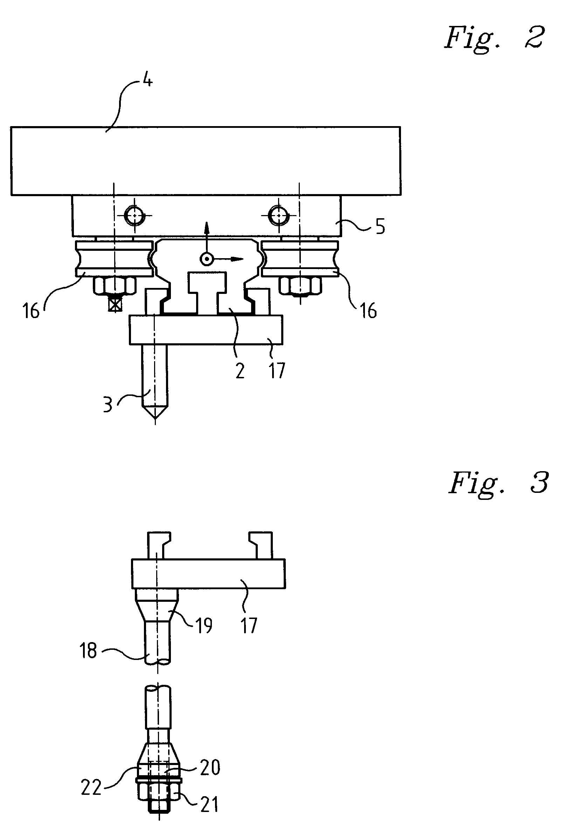

In Fig. 1 ist mit 1 die Längsachse eines nicht dargestellten Motorradrahmens bezeichnet. Eine Schiene 2, die sich quer zur Längsachse des Motorradrahmens und senkrecht zur Lenkrohrachse erstreckt, wird mittels eines in Fig. 2 schematisch bei 3 angedeuteten Zentrierzapfens in das obere Lager am Lenkerkopf des Motorradrahmens eingesetzt. Ein Lasergerät 4 ist auf einem Schlitten 5 angebracht, der längs der Schiene 2 verfahrbar ist. Durch eine Skala 6 mit Millimetereinteilung auf beiden Seiten der Schiene 2 kann der Abstand des Lasergeräts 4 von der Mitte der Schiene eingestellt und abgelesen werden, wobei die mit der Längsachse 1 des Motorradrahmens bzw. der Lenkrohrachse zusammenfallende Mitte durch eine entsprechende Markierung auf der Schiene 2 gekennzeichnet ist.

Das Lasergerät 4 ist auf dem Schlitten 5 horizontal verschwenkbar, wie in Fig. 1 durch einen Drehteller 7 angedeutet, auf dem eine Gradeinteilung 8 zum Einstellen und Ablesen der Schwenkstellung angebracht ist. Diese Verschwenkbarkeit dient zum Anpeilen jedes der beabstandeten Detektoren 14 und 15 von einer seitlichen Stellung des Lasergerätes aus. Ferner ist das Lasergerät 4 senkrecht zur Zeichenebene der Fig. 1 verschwenkbar, wobei ebenfalls eine nicht dargestellte Skala zum Ablesen der Schwenkstellung vorgesehen sein kann.

Unabhängig von der Schiene 2 ist ein U-förmiger Bügel 9 vorgesehen, an dem wenigstens ein Schenkel 10 auf dem senkrecht zur Längsachse 1 verlaufenden Verbindungssteg verschiebbar ist, wie bei 11 angedeutet. An den freien Enden der Schenkel des Bügels 9 ist jeweils ein Teil 12, 12' längs einer Skala mit Millimetereinteilung verstellbar, das einen Zentrierstift 13,13' trägt, auf dem jeweils ein auf der Innenseite angeordneter Detektor 14 und ein auf der Außenseite des Teiles 12 angeordneter Detektor 15 vorgesehen ist. Die innenliegenden Enden der Zentrierstifte 13,13' sind mit einer Spitze versehen, die an der Schwingenaufnahme bzw. an einem Steckbolzen in der Schwingenaufnahme eines Motorradrahmens angesetzt wird. Die Teile 12,12' können durch eine nicht dargestellte Klemmschraube oder dgl. am zugeordneten Schenkel des Bügels 9 festgestellt werden. Die Zentrierstifte 13,13' sind verdrehbar, jedoch nicht verschiebbar, in den Teilen 12,12' eingesetzt, so daß die Detektoren 14 und 15 auf das Lasergerät 4 ausgerichtet werden können. Der Bügel 9 ist starr und rechtwinkelig ausgebildet, so daß die Achsen der Zentrierstifte 13 und 13' miteinander ausgerichtet werden können. Bei 11 kann ebenfalls eine Feststelleinrichtung vorgesehen sein.

Wie Fig. 2 zeigt, weist die Schiene 2 vorzugsweise Kugellaufflächen auf, an denen am Schlitten 5 gelagerte Rollen 16 anliegen. An der Schiene 2 ist ein Träger 17 befestigt, an dem der Zentrierzapfen 3 angebracht ist, der in den Lenkerkopf des Motorradrahmens eingesetzt wird und dessen Achse senkrecht zur Längsachse der Schiene 2 verläuft. Der Schlitten 5 kann mittels einer nicht dargestellten Feststelleinrichtung an der Schiene 2 festgestellt werden.

Wenn ein durch einen Unfall beschädigtes Motorrad vermessen werden soll, wird die den Lenker tragende Brücke vom Lenkerkopf abgenommen und in die freigelegte obere Lagerschale am Lenkerkopf der Zentrierzapfen 3 eingesetzt, der in der gleichen Weise wie die Brücke am Lenkerkopf befestigt werden kann. Mittels des Bügels 9 werden die Zentrierstifte 13,13' an der Zentrierbohrung eines Steckbolzens in der Schwingenaufnahme angesetzt und in ihrer Stellung festgelegt.

Hierauf wird in einem ersten Schritt die Schiene 2 mittels des Lasergerätes 4 parallel zur Schwingenaufnahme dadurch eingestellt, daß das Lasergeräte 4 aus der Mittelstellung um einen bestimmten Betrag nach rechts verschoben und mittels der als Dioden ausgebildeten Detektoren 14 und 15 der Abstand zwischen dem Zentrierstift 13 und Schiene 2 gemessen wird. Der gleiche Meßvorgang wird auf der linken Seite ausgeführt, wobei das Lasergerät 4 um den gleichen auf der Skala 6 abzulesenden Betrag von der Mitte aus verschoben wird. Sobald auf beiden Seiten der gleiche Abstand vorhanden ist, wird die Schiene 2 festgestellt.

In einem zweiten Schritt wird das Lasergerät auf jeder Seite angeordnet und mit dem jeweils innenliegenden Detektor 14 bzw. 14' ausgerichtet, um den Winkel des Lenkerkopfes bzw. der Lenkrohrachse festzustellen, der bei einem bestimmten Motorradtyp einen vorgegebenen Wert haben muß. Dabei kann beispielsweise von einer Ausgangsstellung des Lasergeräts ausgegangen werden, in der dieses mit seiner Achse senkrecht zur Achse des Zentrierzapfens 3 liegt. Der Lenkkopfwinkel ergibt sich aus der Hälfte der Summe der rechts und links ermittelten Winkelwerte.

Gleichzeitig kann bei dieser Messung auch eine Sturzabweichung dadurch festgestellt werden, daß die Differenz zwischen linkem und rechtem Winkelwert gebildet wird. Wird eine Differenz festgestellt, so liegt eine Sturzabweichung vor, die der Hälfte des Differenzbetrages entspricht.

In einem dritten Schritt wird ein eventueller Längsachsenversatz ermittelt, wobei wie bei dem vorausgehenden Meßvorgang mittels des Lasergerätes 4 links und rechts von der Mitte die jeweils innenliegenden Detektoren 14 und 14' angepeilt werden. Wird hierbei eine Differenz des Verschiebeweges des Lasergerätes von der Mitte der Schiene 2 nach rechts und links festgestellt, so liegt die Lenkrohrachse nicht auf der Längsachse 1, die durch die Mitte zwischen den innenliegenden Detektoren 14 und 14' verlaufen muß.

In gleicher Weise kann eine Vermessung an der Steckachsenaufnahme für das Hinterrad vorgenommen werden.

Wenn ein blanker Rahmen ohne Anbauten vermessen werden soll, wird zweckmäßiger Weise an einem Ansatz des Trägers 17 ein Zentrierdorn 18 angebracht, der entsprechend der DE-OS 38 07 577 ausgebildet und in Fig. 3 schematisch widergegeben ist. Der Zentrierdorn 18 weist am oberen Ende einen Konus 19 auf, der in das obere Ende des Lenkerkopfes eingesetzt wird. Am unteren Ende ist ein Gewindeabschnitt 20 vorgesehen, mit dem eine mit einem Flansch versehene Mutter 21 in Eingriff steht, mittels der ein auf dem Schaft des Zentrierdorns verschiebbarer Ringkörper 22 am unteren Ende des Lenkerkopfes angezogen werden kann. Dieser Ringkörper 22 ist ebenfalls mit einer Konusfläche versehen.

Der Träger 17 für die Schiene 2 ist vorzugsweise so ausgebildet, daß der Zentrierzapfen 3 durch einen Zentrierdorn 18 ersetzt werden kann und umgekehrt. Bei dem beschriebenen Ausführungsbeispiel sind die Laserdetektoren 14 und 15 aus Dioden ausgebildet, die direkt an einen Computer zur Auswertung der Meßwerte angeschlossen werden können. Die äußeren Detektoren 15,15' werden für die Abstandsmessung benötigt, um die Schiene 2 parallel zur Schwingenaufnahme einzustellen. Es ist auch möglich, anstelle der beschriebenen Detektoren eine Anordnung vorzusehen, bei der lediglich ein Reflektor auf der Innenseite jedes Zentrierstiftes 13,13' vorgesehen ist. Die inneren Reflektoren 14,14' haben den gleichen Abstand von der Spitze des zugeordneten Zentrierstiftes 13,13'.

Zweckmäßigerweise wird das Lasergerät 4 mit den Dioden 14,15 an einen Computer angeschlossen, der die ermittelten Meßwerte unmittelbar verarbeitet und mit gespeicherten Daten vergleicht, die für die jeweiligen Motorradtypen vorher eingegeben wurden. An den Computer kann ein Drucker angeschlossen sein, der die einzelnen Meßergebnisse ausdruckt.

Ferner kann an dem Lasergerat eine Anzeigevorrichtung vorgesehen sein, welche die jeweiligen Einstellwerte digital anzeigt. Hierfür kann im Lasergerät 4 eine entsprechende Meßeinrichtung zum Feststellen des seitlichen Verschiebeweges und des Neigungswinkels vorgesehen sein.

Anstelle eines auf der Schiene 2 seitlich verschiebbaren Lasergerätes kann auch ein mittig fest angeordnetes Lasergerät vorgesehen werden, das mit seitlich auf der Schiene 2 verschiebbar angebrachten Umlenkspiegeln zusammenwirkt, die auf die Reflektoren bzw. Detektoren an den Zentrierstiften 13 ausgerichtet werden können.

Ebenso ist es möglich, beiderseits der Mitte der Schiene 2 jeweils ein Lasergerät vorzusehen. Schließlich ist auch eine Anordnung möglich, bei der jeweils ein Lasergerät an einem Zentrierstift 13 angebracht ist, das mit Reflektoren bzw. Detektoren an der Schiene 2 zusammenwirkt.

Das erfindungsgemäße Meßverfahren mittels Laserstrahlen zwischen Lenkerkopf und Schwingenaufnahme bietet somit verschiedene Ausgestaltungsmöglichkeiten der Meßvorrichtung selbst, wobei jeweils eine hohe Genauigkeit der Vermessung erzielbar ist und die Vorrichtung einfach an einem zu überprüfenden Motorrad angebracht werden kann.

## Patentansprüche

1. Vorrichtung zum Vermessen eines Zweiradrahmens mit einer in dessem Hauptsymmetrieebene liegenden Lenkkopfachse und mit einer senkrecht zur Hauptsymmetrieebene verlaufenden zweiten Achse, beispielsweise einer Schwingenachse, mit einem am Lenkkopf ansetzbaren Teil (2) und mit zumindest einem mit der zweiten Achse fluchtend ansetzbaren Teil (13), **dadurch gekennzeichnet, daß** das an dem Lenkkopf ansetzbare Teil (2) als Schiene ausgebildet ist, deren Längsachse sich senkrecht zu einem daran angebrachten, in Richtung der Lenkachse ausgerichteten Zentrierzapfen (3, 18) erstreckt, daß wenigstens ein Lasergerät (4) vorhanden ist, das entweder auf der Schiene verschiebbar gelagert und um eine zur Schienenlängsachse parallele Achse schwenkbar ist, oder das mit dem an der zweiten Achse ansetzbaren Teil (13) verbunden ist und um eine zur zweiten Achse parallele Achse verschwenkbar ist, daß das Lasergerät mit einem Detektor oder Reflektor (14) am jeweils anderen Teil zusammenwirkt, und daß Mittel vorhanden sind, um die Winkellage des Lasergeräts (4) zu messen.

2. Vorrichtung nach Anspruch 1, **dadurch gekennzeichnet, daß** das Lasergerät (4) auf einem Schlitten (5) längs der Schiene (2) verfahrbar ist und daß Zentrierstifte (13, 13') an den freien Enden der Schenkel eines U-förmigen Bügels (9) verstellbar angebracht sind.

3. Vorrichtung nach Anspruch 2, **dadurch gekennzeichnet, daß** die Zentrierstifte (13, 13') mit Reflektoren (14) versehen sind.

4. Vorrichtung nach Anspruch 2, **dadurch gekennzeichnet, daß** wenigstens ein Schenkel (10) an dem Bügel (9) verstellbar ausgebildet ist.

5. Vorrichtung nach den Ansprüchen 2 und 4, **dadurch gekennzeichnet, daß** die Zentrierstifte (13, 13') verdrehbar in einem Teil (12, 12') eingesetzt sind, das auf dem zugeordneten Schenkel des Bügels (9) verschiebbar ist.

6. Vorrichtung nach einem der vorhergehenden Ansprüche, **dadurch gekennzeichnet, daß** auf jedem Zentrierstift (13, 13') in einem Abstand voneinander zwei Detektoren (14, 15) angeordnet sind.

7. Vorrichtung nach einem der vorhergehenden Ansprüche, **dadurch gekennzeichnet, daß** die nahe der Spitze der Zentrierstifte (13, 13') liegenden Reflektoren bzw. Detektoren (14, 14') auf beiden Seiten jeweils den gleichen Abstand von der Spitze haben.

## Claims

1. Apparatus for measuring a bicycle frame having a steering head axis lying in the main plane of symmetry of the frame and having a second axis, e.g. a swinging arm axis, extending perpendicular to the main plane of symmetry, having a part (2) positionable on the steering head and having at least one part (13) positionable in alignment with the second axis, **characterized in that** the part (2) positionable on the steering head takes the form of a rail, whose longitudinal axis extends perpendicular to a centring pin (3, 18) mounted on the rail and aligned in the direction of the steering axis, that at least one laser device (4) is provided, which is either supported displaceably on the rail and is capable of swivelling about an axis parallel to the rail longitudinal axis or is connected to the part (13) positionable on the second axis and is capable of swivelling about an axis parallel to the second axis, that the laser device cooperates with a detector or reflector (14) on the respective other part, and that means of measuring the angular position of the laser device (4) are provided.

2. Apparatus according to claim 1, **characterized in that** the laser device (4) is displaceable along the rail (2) on a slide (5) and that centring pins (13, 13') are mounted adjustably on the free ends of the limbs of a U-shaped bracket (9).

3. Apparatus according to claim 2, **characterized in that** the centring pins (13, 13') are provided with reflectors (14).

4. Apparatus according to claim 2, **characterized in that** at least one limb (10) of the bracket (9) is designed so as to be adjustable.

5. Apparatus according to claims 2 and 4, **characterized in** that the centring pins (13, 13') are inserted rotatably in a part (12, 12') which is displaceable on the associated limb of the bracket (9).

6. Apparatus according to one of the preceding claims, **characterized in that** two detectors (14, 15) are disposed at a distance from one another on each centring pin (13, 13').

7. Apparatus according to one of the preceding claims, **characterized in that** the reflectors or detectors (14, 14') on either side, which lie close to the point of the centring pins (13, 13'), are each at an identical distance from said point.

## Revendications

1. Dispositif pour mesurer un cadre de deux-roues ayant un axe de tête de direction s'étendant dans son plan de symétrie principal et un deuxième axe s'étendant perpendiculairement au plan de symétrie principal, par exemple un axe de bras oscillant, comportant une partie (2) pouvant être montée sur la tête de direction et au moins une partie (13) pouvant être montée alignée avec le deuxième axe, caractérisé en ce que la partie (2) pouvant être montée sur la tête de direction est en forme de rail, dont l'axe longitudinal s'étend perpendiculairement à un tenon de centrage (3, 18) aligné suivant la direction de l'axe de direction et monté sur le rail, en ce qu'est prévu au moins un appareil laser (4), qui est soit installé de façon déplaçable sur le rail et pivotant autour d'un axe parallèle à l'axe longitudinal du rail, soit lié à la partie (13) pouvant être montée sur le deuxième axe et pivotant autour d'un axe parallèle au deuxième axe, en ce que l'appareil laser coopère avec un détecteur ou un réflecteur (14) sur l'autre partie, et en ce que des moyens sont prévus pour mesurer la position angulaire de l'appareil laser (4).

2. Dispositif selon la revendication 1, caractérisé en ce que l'appareil laser (4) peut se déplacer sur un coulisseau (5) le long du rail (2) et en ce que des broches de centrage (13, 13') sont montées de façon ajustable aux extrémités libres des bras d'un étrier en forme de U (9).

3. Dispositif selon la revendication 2, caractérisé en ce que les broches de centrage (13, 13') sont munies de réflecteurs (14).

4. Dispositif selon la revendication 2, caractérisé en ce qu'au moins un bras (10) est ajustable sur l'étrier (9).

5. Dispositif selon les revendications 2 et 4, caractérisé en ce que les broches de centrage (13, 13') sont installées, avec possibilité de les faire tourner dans une partie (12, 12'), mobile sur le bras associé de l'étrier (9).

6. Dispositif selon l'une des revendications précédentes, caractérisé en ce que deux détecteurs (14, 15) sont disposés à une certaine distance l'un de l'autre sur chaque broche de centrage (13, 13').

7. Dispositif selon l'une des revendications précédentes, caractérisé en ce que les réflecteurs ou respectivement détecteurs (14, 14') placés à proximité de la pointe de la broche de centrage (13, 13') sont des deux côté chacun à la même distance de la pointe.
